# EUROPÄISCHE PATENTANMELDUNG

(11) **EP 1 955 902 A2**
(43) Veröffentlichungstag der Anmeldung: **13.08.2008**
(21) Anmeldenummer: 08000551.5
(22) Anmeldetag: 14.01.2008
(51) Int. Cl.: B60R 16/023, F01P 5/02, B60K 11/06, B60R 11/00

(54) **Vorrichtung zur Befestigung eines elektrischen Bauteils eines Kraftfahrzeugs**

(30) Priorität: 08.02.2007 DE 102007006234
(71) Anmelder: Behr GmbH & Co. KG, 70469 Stuttgart (DE)
(72) Erfinder: Arleth, Michael, 71665 Vaihingen (DE); Bielesch, Thomas, 75417 Mühlacker (DE)

(57) **Zusammenfassung**

Vorrichtung zur Befestigung eines elektrischen Bauteils (7) eines Kraftfahrzeugs, umfassend zumindest einen ersten Vorsprung (8, 9) an einem Gehäuse des elektrischen Bauteils (7), und zumindest eine formschlüssig zu dem ersten Vorsprung (8, 9) ausgebildete Aufnahme (2, 3), wobei die formschlüssige Aufnahme (2, 3) an einer Komponente (1) des Kraftfahrzeugs ausbildbar ist und wobei das Gehäuse (7) an der Komponente (1) mittels des Vorsprungs (8, 9) und der formschlüssigen Aufnahme (2, 3) lösbar festlegbar ist.

## Beschreibung

Die Erfindung betrifft eine Vorrichtung zur Befestigung eines elektrischen Bauteils eines Kraftfahrzeugs mit zumindest einem ersten Vorsprung an einem Gehäuse des elektrischen Bauteils, wobei das Gehäuse an einer Komponente des Kraftfahrzeugs lösbar festlegbar ist.

Bei Komponenten von Kraftfahrzeugen, die zumindest teilweise elektrische Funktionen aufweisen, sind regelmäßig elektrische Bauteile wie etwa Ansteuerungsrelais an diesen Komponenten vorgesehen. Oft ist die herkömmliche Festlegung dieser Bauteile an den Komponenten aufwendig und zeitraubend. Zum Beispiel werden Steuerrelais zur Ansteuerung von Lüftermotoren an den aus Kunststoff bestehenden Lüfterzargen durch Anschrauben einer Befestigungslasche des Relaisgehäuses oder durch eine ähnlich aufwendige mechanische Sicherung festgelegt. Durch die zusätzlichen Bauteile und den Aufwand bei der Montage entstehen Kosten.

Es ist die Aufgabe der Erfindung, eine kostengünstige und schnell montierbare Vorrichtung zur Befestigung eines elektrischen Bauteils eines Kraftfahrzeugs anzugeben. -

Diese Aufgabe wird für eine eingangs genannte Vorrichtung mit den Merkmalen des Anspruchs 1 gelöst.

Durch die formschlüssige Ausbildung des Vorsprungs an dem Gehäuse des Bauteils und die Aufnahme an der Komponente ist eine einfache Festlegung des Bauteils erzielbar, insbesondere durch Einschieben und Verrasten. Aufwendige Handgriffe wie ein Verschrauben des Bauteils, besonders mittels weiterer Teile wie einer Schraube, können zweckmäßig entfallen.

Bevorzugt ist der Vorsprung dabei im Wesentlichen T-färmig, wodurch eine gute Maßtoleranz in Verbindung mit einer sicheren und einfachen Festlegung gegeben ist.

In besonders bevorzugter Ausführung sind formschlüssige Mittel zur lösbaren Verriegelung des Gehäuses vorgesehen, so dass das Gehäuse ohne weitere Mittel gegen ein z.B. vibrationsbedingtes Lösen von der Komponente gesichert ist. Die formschlüssigen Mittel können insbesondere eine federnde Raste umfassen.

Weiterhin bevorzugt ist zumindest ein zweiter Vorsprung an dem Gehäuse und zumindest eine zweite formschlüssige Aufnahme an der Komponente vorgesehen. Hierdurch wird die Sicherheit der Festlegung weiter verbessert, wobei zudem eine genaue Orientierung des Bauteils während der Montage auf einfache Weise vorgebbar ist.

In einer besonders bevorzugten Ausführungsform ist die Komponente eine Lüfterzarge, und insbesondere bevorzugt ist das elektrische Bauteil ein Relais. Vorteilhaft kann die formschlüssige Aufnahme als Durchbrechung einer Wandung der Komponente ausgebildet sein. Ein besonderer Vorteil ergibt sich dabei insbesondere dann, wenn die Komponente eine Lüfterzarge ist, da die flächigen Wandungen von Lüfterzargen sich für die Ausbildung von Durchbrechungen zur Festlegung von Bauteilen gut eignen. Solche Durchbrechungen können entweder ursprünglich in einer Spritzform vorgesehen sein oder nach einem Spritzgießen der Lüfterzarge durch Stanzung oder sonstige Nachbearbeitung der Wandung der Lüfterzarge ausgebildet werden. Anstelle einer Durchbrechung kann jedoch auch eine entsprechende geschlossene Ausformung der Wandung vorgesehen sein.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Vorrichtung beschrieben und anhand der anliegenden Zeichnungen näher erläutert.
- Fig. 1: zeigt eine schematische Draufsicht auf eine erfindungsgemäße Vorrichtung in einem festgelegten Zustand.
- Fig. 2: zeigt eine schematische Draufsicht auf formschlüssige Aufnahmen der Komponente aus Fig. 1 unter Weglassung des festgelegten Bauteils.
- Fig. 3: zeigt eine Draufsicht auf das elektrische Bauteil aus Fig. 1 von oben.
- Fig. 4: zeigt eine seitliche Draufsicht auf das Bauteil aus Fig. 3.

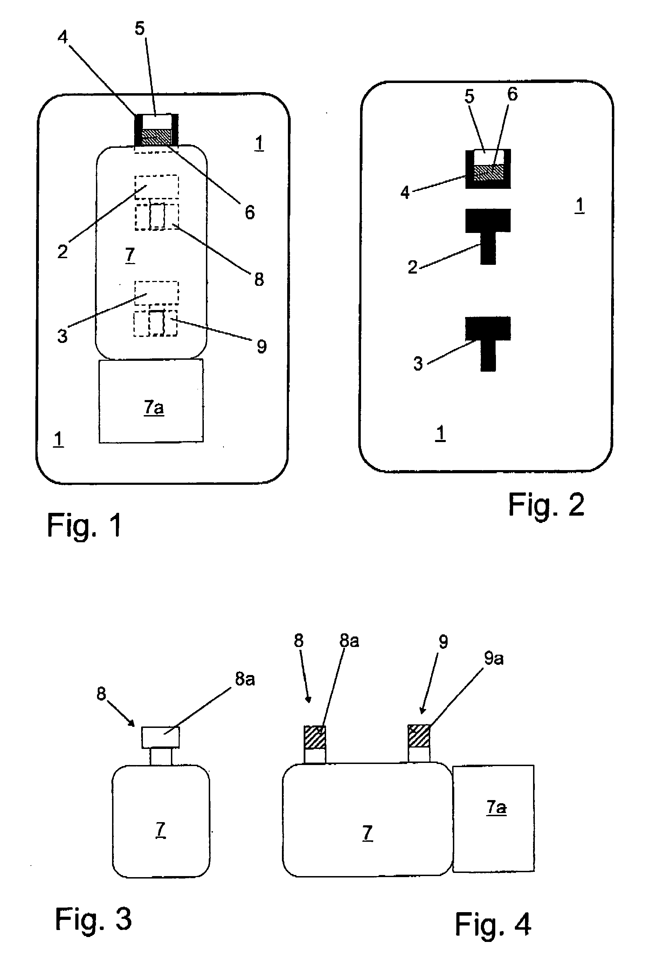

Die Ansicht gemäß Fig. 1 zeigt einen Ausschnitt aus der Oberfläche einer Lüfterzarge 1, welche als Komponente an einem Kraftfahrzeug angebracht ist. In der Wandung der Lüfterzarge 1 ist eine erste im wesentlichen T-förmige Durchbrechung 2 und eine zweite, im wesentlichen T-förmige Durchbrechung 3 vorgesehen. Ferner ist eine dritte Durchbrechung 4 vorgesehen, welche im wesentlichen U-förmig ist und eine Zunge 5 aus der Wandung der Lüfterzarge 1 definiert. Die Zunge 5 hat eine endseitige Materialerhöhung 6, wobei die Zunge 5 entsprechend der Auslegung der Wandstärke der Zarge und der Länge der Zunge 5 federnd ausgebildet ist. Die elastische Federwirkung der Zunge 5 umfaßt dabei mindestens einen Hub, der der Bauhöhe des Vorsprungs 6 entspricht.

Ein elektrisches Bauteil 7 umfasst ein Gehäuse mit einem darin befindlichen Relais (nicht dargestellt) sowie ein angrenzendes Steckergehäuse 7 a. Wie die Draufsicht von oben und die seitliche Ansicht des Bauteils 7 gemäß Fig. 3 und Fig. 4 zeigen, sind seitlich an dem Gehäuse ein erster Vorsprung 8 und ein zweiter Vorsprung 9 angeordnet, die insbesondere als einstückiges Spritzformteil aus Kunststoff mit dem Gehäuse 7 ausgebildet sind. Die Vorsprünge 8, 9 sind in Querschnitt T-förmig, wie die Draufsicht gemäß Fig. 3 zeigt. Ein jeweiliger Kopf 8a, 9a, der dem Querbalken des "T" entspricht, paßt dabei in den Kopf des jeweiligen T-förmigen Ausschnitts 2, 3 in der Wandung der Lüfterzarge. Anstelle einer T-Form kann auch eine L-Form vorliegen, wobei die Richtung des verriegelnden Fortsatzes des "L" bei zwei unterschiedlichen Vorsprüngen zweckmäßig in entgegengesetzte Richtungen zeigt.

Die Erfindung funktioniert nun wie folgt:

Bei der Montage einer vollständigen oder teilmontierten Lüftereinheit, insbesondere für den Hauptkühler eines Kraftfahrzeugs, ist das Steuerrelais 7 für den Lüftermotor an der Lüfterzarge 1 zu befestigen. Hierzu wird das Bauteil 7 mit seinen Vorsprüngen 8, 9 in die jeweils korrespondierenden Durchbrechungen 2, 3 eingesteckt, bis die Köpfe 8a, 9a die Wandung der Lüfterzarge vollständig durchgreifen. Dabei übergreift ein Teil des Gehäuses 7 zunächst die Zunge 5, wobei der Vorsprung 6 durch das Gehäuse 7 heruntergedrückt wird, so dass die Zunge 5 federnd vorbelastet wird. Nachfolgend wird das Gehäuse 7 gemäß der Ansicht nach Fig. 1 nach unten verschoben, wobei Hälse der T-förmigen Vorsprünge 8, 9 in Hälsen der T-förmigen Durchbrechungen 2, 3 geführt sind. Etwa mit Anschlag der Hälse der Vorsprünge 8, 9 übergreift das Gehäuse 7 den Vorsprung 6 der Zunge 5 nicht mehr, so dass diese federnd zurückschnappt und eine Sicherung gegen ein Zurückschieben des Gehäuses 7 in Gegenrichtung bildet. In dieser in Fig. 1 dargestellten verriegelten Stellung des Gehäuses 7 hinterschneiden die Köpfe 8a, 9a die Durchbrechungen 2, 3 formschlüssig, so dass eine formschlüssige lösbare verriegelte Festlegung des Gehäuses 7 an der Komponente 1 des Kraftfahrzeugs besteht.

## Patentansprüche

1. Vorrichtung zur Befestigung eines elektrischen Bauteils (7) eines Kraftfahrzeugs, umfassend
zumindest einen ersten Vorsprung (8, 9) an einem Gehäuse des elektrischen Bauteils (7), und
zumindest eine formschlüssig zu dem ersten Vorsprung (8, 9) ausgebildete Aufnahme (2, 3), wobei die formschlüssige Aufnahme (2, 3) an einer Komponente (1) des Kraftfahrzeugs ausbildbar ist und wobei das Gehäuse (7) an der Komponente (1) mittels des Vorsprungs (8, 9) und der formschlüssigen Aufnahme (2, 3) lösbar festlegbar ist.

2. Vorrichtung nach Anspruch 1, **dadurch gekennzeichnet, dass** der Vorsprung (8, 9) im wesentlichen T-förmig ist.

3. Vorrichtung nach einem der vorhergehenden Ansprüche, **dadurch gekennzeichnet, dass** formschlüssige Mittel (5, 6) zur lösbaren Verriegelung des Bauteils (7) vorgesehen sind.

4. Vorrichtung nach einem der vorhergehenden Ansprüche, **dadurch gekennzeichnet, dass** zumindest einer zweiter Vorsprung (9) an dem Bauteil (7) und zumindest eine zweite formschlüssige Aufnahme (3) an der Komponente (1) vorgesehen ist.

5. Vorrichtung nach einem der vorhergehenden Ansprüche, **dadurch gekennzeichnet, dass** die Komponente (1) eine Lüfterzarge ist.

6. Vorrichtung nach einem der vorhergehenden Ansprüche, **dadurch gekennzeichnet, dass** das elektrische Bauteil (7) ein Relais, ein Widerstand, insbesondere Vorwiderstand und/oder ein Steuergerät, insbesondere Regler ist.

7. Vorrichtung nach einem der vorhergehenden Ansprüche, **dadurch gekennzeichnet, dass** die formschlüssige Aufnahme (2, 3) als Durchbrechung einer Wandung der Komponente (1) ausgebildet ist.
